(19) Europäisches Patentamt
European Patent Office
Office européen des brevets

(11) **EP 2 860 940 B1**

(12) **EUROPEAN PATENT SPECIFICATION**

(45) Date of publication and mention
of the grant of the patent:
**14.09.2016   Bulletin 2016/37**

(51) Int Cl.:
*H04L 29/08* (2006.01)          *G06Q 50/00* (2012.01)

(21) Application number: **13306341.2**

(22) Date of filing: **27.09.2013**

(54) **Method for caching**

Verfahren zum Zwischenspeichern

Procédé de mise en antémémoire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015   Bulletin 2015/16**

(73) Proprietor: **ALCATEL LUCENT
92100 Boulogne-Billancourt (FR)**

(72) Inventors:
• **De Vleeschauwer, Danny
2018 Antwerpen (BE)**
• **Hawinkel, Chris
2018 Antwerpen (BE)**

(74) Representative: **ALU Antw Patent Attorneys
Copernicuslaan 50
2018 Antwerpen (BE)**

(56) References cited:
**US-A1- 2010 281 035**

• **LU HAN ET AL: "SocialCDN: Caching techniques
for distributed social networks", PEER-TO-PEER
COMPUTING (P2P), 2012 IEEE 12TH
INTERNATIONAL CONFERENCE ON, IEEE, 3
September 2012 (2012-09-03), pages 191-202,
XP032256761, DOI: 10.1109/P2P.2012.6335799
ISBN: 978-1-4673-2860-9**
• **SOYSA DINUKA A ET AL: "Predicting YouTube
content popularity via Facebook data: A network
spread model for optimizing multimedia
delivery", 2013 IEEE SYMPOSIUM ON
COMPUTATIONAL INTELLIGENCE AND DATA
MINING (CIDM), IEEE, 16 April 2013 (2013-04-16),
pages 214-221, XP032482731, DOI:
10.1109/CIDM.2013.6597239 [retrieved on
2013-09-12]**

**Description**

Technical Field

The invention relates to a method for storing a selection of multimedia objects by a dedicated storage hosted in a router or a storage device residing close to a router. Such storage is also referred to as caching. The invention further relates to a dedicated storage hosted in a router or a storage device residing close to a router for caching a selection of multimedia objects. Such dedicated storage or storage device is generally known as a cache, which cache is provided for serving a group of users.

Background

Caching algorithms for CDNs (content distribution networks), reverse proxies or transparent caches, etc. have been studied and are fairly well understood. Many variants of caching algorithms for individual caches are known (e.g., LRU (least recently used), LFU (least frequently used), Belady's min algorithm, ...). Such a cache bases its caching decisions solely on the requests it sees from users it serves. Basically it first makes a prediction of the frequency with which each item (that is not too old) will be requested, i.e., it estimates the item's future popularity (or reversely, the first time an item will be re-used). Then it orders the items from highest to lowest popularity (or smallest to highest re-use time respectively) and caches the most popular objects (or most imminent items respectively) (as illustrated in Figure 2). Such caching system is known from US2010/0281035.
The drawback of such a method is that due to the fact that nowadays caches reside closer to the end users than they used to do, and hence, are serving a limited number of users, the popularity measurement is noisy and caching decisions are often wrong.
Cache collaboration algorithms (e.g., hierarchical, borrowing caches, federated caches) between caches deployed in a tree network also exist. They rely on a central authority (which may be either implemented centrally or in a distributed way) that makes coordinated decisions related to where to store content items and from where to serve the requests. Viewed in that way, these cache collaboration strategies oversee and govern one large virtual cache consisting of many individual coordinated caches that are organized in a tree network. However the centrally coordinated caches only work in a geographically confined region and for a tree network.
The above shows that both the caches that operate based on local predictions as well as caches that operate based on centrally coordinated mechanisms (which are in fact only extension of the previous case to a virtual cache serving a geographically confined set of communities) fail to correctly estimate the popularity of multimedia items for a predetermined group of users (the users served by the network node or router that performs the caching). There is thus a need for an improved caching mechanism.
It is an object of the present invention to provide an improved caching mechanism.

Summary

To this end, the invention provides a method for caching a selection of multimedia objects by a cache (either implemented as dedicated storage in a router or in a separate device close to the router), the method comprising the steps of:

- serving a group of users by a first cache;
- calculating a first popularity factor for each of the multimedia objects based on said serving said group of users;
- retrieving a database comprising information defining relations between said group of users and other groups of users served by respective other caches;
- retrieving a further popularity factor for each of the multimedia objects from each of said further caches;
- calculating a similarity factor defining a similarity between said group of users served by the first cache and each one of said other groups of users served by other caches, based on the retrieved database;
- calculating a second popularity factor for each of the multimedia objects based on said first popularity factor and said further popularity factors, wherein the weight of the further popularity factors is proportional to the corresponding calculated similarity factor;
- selecting multimedia objects with the highest second popularity factor;
- caching said selected multimedia objects in the first cache.

In this proposed invention the caches are making independent decisions, and they do so based on local information and based on exchanged information with other caches combined with information from formal or informal social networks (retrieved from a database) to improve the caching decisions. Thereby the method for caching includes the local predictions, whereby the popularity of multimedia objects is estimated based on the serving the group of users by the cache itself. The method for caching further includes predictions of other caches in the network, whereby the influence of each of the other cache in the final popularity depends on the similarity between the other cache and the first cache. Thereby the popularity of multimedia objects, used for caching, is better tailored to the users served by the cache, because the invention exploits the fact that users in disconnected geographic regions may expose similar taste in content. By identifying the social relations between (groups of) users and the local consumption patterns in each group, the imminent popularity of content objects will be identified sooner with this invention than with state-of-the-art systems. Hence, the popularity factors calculated according to the invention are improved with respect to the local predictions, yet without getting too general, as only groups with similar taste impact other groups. As a consequence the invention will yield better caching decisions, which in turn will lead to higher cache hit ratios. The traffic over the core network will decrease for the same QoE (quality of experience) of the user, or the QoE of the user will improve with the same capacity of the core network. In that way the network provider will benefit from the invention by saving traffic, the users will see an improved QoE and, this improved user satisfaction will in turn be beneficial to the online social networks as well.

Preferably the first popularity factor is calculated based on a number of historical requests for the respective multimedia object by said group of users. Preferably each of the further popularity factors are calculated based on a number of historical requests for the respective multimedia object by said respective other groups of users. Calculating a popularity factor based on the number of historical requests is known to the skilled person, therefore using such known mechanism allows obtaining a local popularity factor.

Preferably said number of historical requests is counted in a predetermined time period, that is updated regularly (usually referred to as a sliding window). By limiting and continuously updating the time period wherein history requests are counted, the popularity of multimedia objects that are past their popularity peak will decrease since part of the requests will fall out of the sliding window. In this manner, the popularity factor can be kept up-to-date and new multimedia objects that are frequently requested will have a higher popularity than old multimedia objects that have been requested much more often (in the past) than the new multimedia objects, but now are way past their popularity peak.

Preferably said database comprises a matrix wherein at least one of a column and a row represent said users, and wherein at least another one of said column and said row represent said further users, and wherein the values in the matrix define the relation between the respective users and the respective further users. Via such matrix, the similarity between caches can be determined on a user-level or on a group-level. Thereby, the skilled person will recognize that different algorithms can be applied for obtaining a single similarity factor between two caches based on the matrix. A simple example of the algorithm counts the relations between users of one router and users of the other router. The result of the count quantizes the similarity. In other algorithms, a higher influence is given to users with high multimedia object consummation.

Preferably said matrix comprises a first predetermined value when the user identified by the row index is linked to the user identified by the column index via a social community, and a second predetermined value when the user identified by the row index is not linked to the user identified by the column index via said social community. Preferably the social community comprises at least one of Facebook, Twitter, Instagram, Google+, Netflix, Tumblr, Snapshot, Pinterest and Vine. Social communities tend to have groups of people linked to one another, wherein the people share the same interests. Because the people that are linked have the same or at least similar interests, it is likely that the same or similar multimedia objects are requested by the so linked people. Therefore using the social community information as a basis for defining relations between users and further users returns fairly good results. Alternatively, if this social information is not available, the similarity between the group of users served by the first cache and the groups of users served by other caches can be datamined based on historical similar consumption trends. Hence, if the social information is not explicitly available, a separate entity performs this data mining.

Preferably said retrieving said database comprises observing requests made by said number of users and by said further number of users over a period of time, and detecting respective similarities between said number of users and said further number of users. This feature eliminates the need for social communities. According to the present feature, the database is mined via observation. When observing users, similarities in multimedia object consumption can be detected and stored in a database. Based on this detection (based on history requests), future similarity factors are calculated and multimedia objects are cached via the method of the invention.

Preferably the step of selecting which multimedia objects to cache comprises ranking the multimedia objects from highest to lowest the second popularity factor and selecting the top list of the ranked multimedia objects. Thereby the top list comprises a predetermined number of multimedia objects, or comprises a number of multimedia objects occupying (or representing) a predetermined data capacity. By ranking and then selecting a top list, an easy way is provided to select the multimedia objects with the highest second popularity factor. Furthermore, in the cache, the top list of multimedia objects is stored. Alternatively, the cache has a predetermined data capacity, which is preferably fully occupied. In the latter case, multimedia objects are selected from the ranked list until the cache is full.

Preferably said calculating said second popularity factor is calculated for each multimedia object as the sum of the first popularity factor and the further popularity factors retrieved from other caches multiplied by their corresponding similarity factors between the first cache and the other caches. Thereby a simple formula can be executed by each cache, based on information calculated in the cache and information retrieved by the cache, to determine the second popularity factor of the multimedia objects.

Preferably the second popularity factor further includes an externally determined popularity factor received from an external server with a global view on content consumption (e.g., other distribution channels than online viewing for a movie, i.e., the "box office" performance from when the movie was offered in theaters or DVD sales; or for the current episode of a series the performance of previous episodes in the same series), multiplied by a predetermined factor.

Via externally determined popularity factors, new multimedia objects (that have not been requested because they are new) are also represented in the popularity estimations of the invention. For example a newly released movie can be cached in the first cache when it is estimated that this movie will have a high popularity in the near future.

Preferably said predetermined factor is increased when requests of said number of users confirm the externally determined popularity factor, and whereby said predetermined factor is decreased when requests of said number of users differ from the externally determined popularity factor. By increasing and decreasing the predetermined factor based on the similarity between the requests and the popularity, the influence of the externally determined popularity factor will reach an optimum.

Preferably said serving said group of users comprises systematically transmitting, upon request of one of said users, a respective multimedia object to the user.

The invention further relates to a caching device close to a router or a router hosting storage adapted for serving a number of users in a network, said router being operationally connected to a cache memory, and wherein said router comprises programmed instructions for executing the method according to any one of the previous claims.

Brief description of the figures

Some embodiments of apparatus and/or methods in accordance with embodiments of the present invention are now described, by way of example only, and with reference to the accompanying drawings, in which:

figure 1 shows an example of a network wherein the invention is applicable;
figure 2 illustrates a conventional network node wherein the invention is applicable;
- figure 3 illustrates an embodiment of the invention; and
figure 4 illustrates a database comprising information defining relations between users.

Detailed description of embodiments

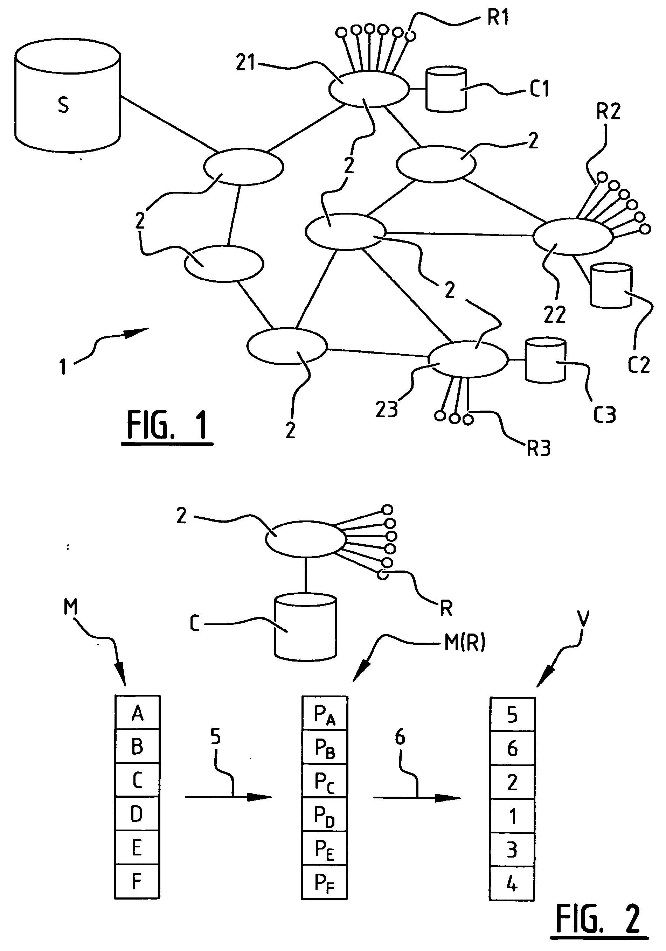

Figure 1 illustrates an example of a network 1 having multiple network nodes 2. The network nodes 2 connect the server S with the users making content requests R. Users connected to network node 21 make requests R1, users connected to network node 22 make requests R2, and users connected to network node 23 make requests R3. Thereby, a network node is preferably a router that is operationally connected to a local cache. Router 21 is connected to cache C1, router 22 is connected to cache C2 and router 23 is connected to cache C3. In this manner, the caches are located in the network nodes directly serving (directly adjacent to) the users. Information stored in these caches must not, when requested by a user served by this cache/router, travel the network 1. In the present invention, this information is defined as multimedia objects. Multimedia objects are digital files comprising music, books, video, self-created content, professional content, games. It will be clear that for example a movie can be divided over multiple objects, whereby each object comprises a segment of the movie.

Since more and more unicast video is offered over the open Internet, it is desirable to deploy caches close to the users (see Figure 1). With an adequate caching strategy governing those caches, a lot of traffic can be saved on the core network 1 between the server S and the caches C1, C2, C3. That is, (in principle) a content item only needs to be transported once over that core network 1 (to populate the cache), since it can be served from that cache to each requesting user R1, R2, R3 from the moment it resides in the cache C1, C2, C3. However, caches, although potentially very large, are limited in size compared to the size of typical video libraries, and hence, a careful decision needs to be made as to which items to cache.

Reverse proxies and transparent caches decide for themselves which items they cache at any moment in time based on the requests they see from the users they serve. Since these caches reside very close to the users, and hence, the number of users they serve is rather limited compared to caches deeper in the network (e.g., the caching nodes of a global CDN (content distribution network)), this information (i.e., the requests made by the users served by the cache) is too noisy to make accurate caching decisions pertaining to which content items to cache (see below). Such conventional method is illustrated in figure 2. Figure 2 shows a router 2 (network node) operationally connected to a cache C. Users connected to the router 2 make requests R. Based on these requests, the router identifies requested multimedia objects M. Preferably, the multimedia objects M comprise the multimedia objects R that are requested by users during a predetermined time period (for example 48 hours). For each of these multimedia objects M, a popularity P is calculated based on the number of requests R (therefore in the figure this is indicated as M(R)). Based on the calculated popularities P, a ranking V is made 6, and the highest ranked multimedia objects (in the example of figure 2, D is highest, C is second highest and E is third highest) are cached. Depending on the storage capacity of the cache C, the total number of multimedia objects to be cached is determined.

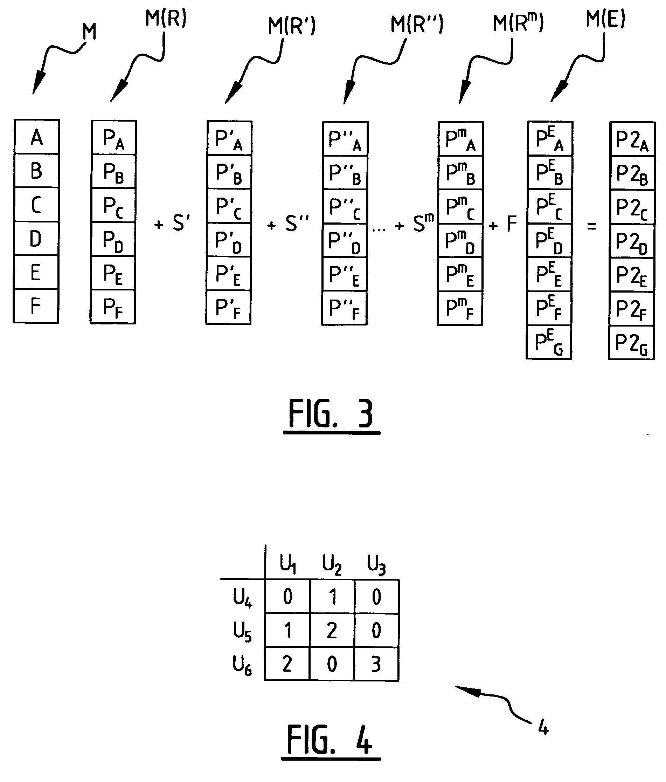

The invention is based on the insight that users (served by one cache) are "connected" to other users (served by other caches) via online social networks (e.g., facebook, twitter, google+) or via the fact that some (informal) communities share common interests, which connection can be used in caching decisions. This invention proposes a way to exploit the information extracted from (formal or informal) social networks to make better caching decisions, resulting in higher cache hit ratios. Figure 4 shows an example of a matrix that comprises information defining relations between users. In the figure, the columns represent the users U1 (column 1), U2 (column 2) and U3 (column 3). The rows represent the users U4 (row 1), U5 (row 2) and U6 (row 3). Each element in the matrix thereby combines a row-user with a column-user. The example of figure 4 shows elements as being natural numbers between 0 and 3. Thereby, 0 could be defined as 'no relation', 1 could be defined as 'a connection via a single social community', 2 could be defined as 'a connection via two different social communities, for example via facebook and via Tumblr', and 3 could be defined as 'a connection via three different social communities. Alternatively, the height of the number in the matrix can be a measure of the similarity in content usage between two users. In the figure, the first element 0 indicates that there is no relation between user 1 U1 and user 4 U4. The second element (row 1, column 2) indicates that there is a relation between user 2 U2 and user 4 U4. The further elements show relations between respective users.

Alternatively, the matrix comprises information defining the relation between user groups (instead of the relations between individual users). Such matrix can be formed using the information of the matrix shown in figure 4. Thereby each user group (served by the different caches) is represented in both the rows and the columns of the matrix. In such matrix, the diagonal elements are not needed, and hence, not defined. Based on such matrix, the caches can directly read the similarity factor from the matrix whereas the matrix of figure 4 requires some further calculations to obtain the similarity factor.

The skilled person will understand that a database comprising information defining relations between users can be formed in many different ways without decreasing the functionality and usability of such database. For example the database can be created such that all users are represented in both column and row such that relations between users served by a same network node are also monitored.

In the present invention, relation is interpreted as belonging to a similar social group, explicitly or implicitly. In a social group, overlapping interests can generally be found, which overlapping interests reflect in the content usage (or requests of multimedia objects). Therefore in the context of the invention, a relation implies an at least partially similar behavior on the network.

The basic goal of this invention is to make the popularity measurements M(R) (or equivalently the re-use times) more reliable (i.e., less noisy). In order to achieve this, two pieces of information are used:

a) the estimated popularity M(R), M(R'), M(R"), $M(R^n)$ (or estimated re-use) of items on all the individual caches. That is, each cache will estimate the local popularity (according to prior art mechanisms) and will send this information to the other caches and receive that information from other caches. Notice that one of the popularity measurements can be the global one estimated by an external server.

b) the way the population of one cache (and possibly the global popularity) relates S', S", $S^n$ to the population on another cache. This information is for example extracted from online social networks (e.g., the user friends network of an online social network) or is alternatively built by observing which users consume similar items. This information can, for instance, be stored under the form of a matrix 4 (see figure 4) of which entry (k, 1) determines how strong the relation is between the population served by cache k (or the global population) and the population served by cache 1.

The invention proposes to combine these two pieces of information to come to a better popularity estimation, and hence, better caching decisions. This is illustrated in figure 3. Figure 3 shows the multimedia objects M (being the objects A, B, C, D, E and F) for which a decision is to be taken regarding which object to cache. Each network node is provided (for example via prior art methods) for determining a first popularity factor for each of the multimedia objects. Thereby, according to the invention, a first network node is provided to further calculate a second popularity factor, which is an enhanced popularity factor compared to the first popularity factor. Thereby, the first network node calculates a first set of popularity factors M(R) for each of the multimedia objects M (being the popularity factors $P_A$, $P_B$, $P_C$, $P_D$, $P_E$ and $P_F$). In the network, further network nodes are present, which serve a further number of users. The further number of users make their requests R', R", $R^n$. Based on the respective requests, each of the further network nodes can for each of the multimedia objects calculate a popularity factor M(R'), M(R") and $M(R^n)$. These popularity factors are transmitted from the further network nodes to the first network node. Furthermore, a database (such as is shown in figure 4) is retrieved by the first network node, based on which database the first network node can calculate a similarity factor between the first network node and the first further network node (being the similarity factor S'), a similarity factor between the first network node and the second further network node (being the similarity factor S"), and a similarity factor between the first network node and the $n^{th}$ further network node (being the similarity factor $S^n$).

Based on these received and determined factors, the first network node calculates a second (enhanced) popularity factor via following formula:

$$M(R) + (S' \times M(R')) + (S'' \times M(R'')) + (...) + (S^n \times M(R^n))$$

In a preferred example as is shown in figure 3, the second popularity factor further comprises external information M(E). This external information (external popularity factor) can be received from a network administrator. Where the popularity factors of the first and further network nodes are mainly based on historical requests, the external information can be based on estimations of future interests (such as a new movie that is to be released) or past consumption via other distribution channels (like via the "box office" or DVD sales). The external popularity factor can comprise the popularity of a currently unknown multimedia object G (for example the new movie). A factor F can be determined to balance the influence of the external popularity factor in the second popularity factor. Thereby the factor F can be made dynamically such that when the external popularity factor proves to be correct, F is increased while F is decreased when the external popularity factor proves to be wrong. The second (enhanced) popularity factor comprises, additionally to the above-mentioned formula: $+ (F \times M(E))$.

The second (enhanced) popularity factor, calculated in the first network node, has a format that is highly similar to the conventional popularity factor format (such as M(R) in figure 2) and therefore the skilled person will understand how these second popularity factors can be used to decide 6 which of the multimedia objects are to be cached.

It has to be understood that, apart from this new popularity P2 (or re-use time) estimation algorithm, the rest of the caching algorithm preferably remains the same as in the prior art. Thus the ordering 6 of the multimedia objects M based on the popularities M(R), which is shown in figure 2, will according to the invention be based on the second popularity P2.

The further description will be given with respect to some particular embodiments. It will be clear that these particular embodiments are not limiting, and are only examples falling within the general principles of the invention. In these embodiments it is assumed for simplicity of the example that each multimedia object M is uniquely definable by an identifier A, B, C, D, E and F. This can be either a hash calculated on the video file, the unique name from a database (e.g., IMDB (internet movie data base) or tv.com) or the unique URL (uniform resource location) of the original location of the file.

In these embodiments it is further assumed for simplicity of the example that a cache maintains popularity information for all "active" items. Active items are items for which a request was seen less than a time T ago (where T is a large time interval). Using this timeout time T ensures that the caches only need to maintain popularity information for a finite (albeit possibly very large) set of content items. (The letters A, B, C, D, E, F and G are used as example for unique identifiers).

The matrix 4 with entries (referred to as weights in Figure 3) designates how the population of cache k (being in the example of figure 4 the users U1, U2 and U3) (or the global population served by the origin server) impacts to population of cache 1 (being in the example of figure 4 the users U4, U5 and U6). This matrix 4 can be either constructed in an online social network based on the friend networks between users served by different caches or these user population dependencies can be inferred (or learnt) by an independent data-mining entity by observing (in the network) the similarity in consumption patterns of the user populations, i.e., how the user populations of different caches consume similar content items. The appropriate elements of this matrix M with weights is sent from the social network or from the independent data-mining entity to all caches or corresponding routers.

The first embodiment relies on LFU to make the local popularity measurements. In particular, LFU maintains the number of requests $P_{k,x}$ for a multimedia object X over a past window on cache k (and possibly also on the origin server). (This window usually has a rectangular shape, but other shapes to decrease the importance of requests in the distant past less, e.g., an exponentially decaying window, can be used too). This number of requests for active items on cache k constitutes the vector $P_k$ (being the popularity of the respective item on the cache at a certain point in time). The vectors $P_k$ are exchanged between all caches at regular instants. In order to make a better prediction for the popularity of item X, cache k combines the information in these vectors $P_l$ and the matrix M in the following way: $P'_{k,x} = \sum_l M_{kl} \cdot P_{l,x}$. The cache makes better caching decisions based on these more accurate measurements $P'_{k,x}$ of the popularities of the items.

The second embodiment relies on LRU (or any variant of Belady's min algorithm). In particular, LRU (implicitly) maintains the re-use times $T_{k,x}$ of each active item X on cache k (and possibly also on the origin server). These re-use times, stored in a vecor $T_k$, are exchanged between the caches at regular instants. In order to make better estimations of the re-use time, cache k combines the information in these vectors $T_l$ and the matrix M in the following way: $T'_{k,x}=(\sum_l M_{kl}\cdot(T_{l,x})^{-1})^{-1}$ The cache makes better caching decisions based on these more accurate measurements $T'_{k,x}$ of re-use time of the items.

The invention can be embedded in existing caching algorithms. Caching algorithms can work as before, estimating the popularity (or re-use time) and basing caching decision on popularity (or re-use time). Thereby the popularity (or re-use time) upon which the decisions are made, is not the locally measured one (as in the prior art), but a combination of all popularities of all caches, where the weight of each is determined by social relations.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGS., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Method for storing a selection of multimedia objects by a first storage means (C1), the method comprising the steps of:

- serving a group of users (R1) by said first storage means;
- calculating a first popularity factor (M(R)) for each of the multimedia objects (M) based on a number of historical requests of the respective multimedia object by said group of users;
- retrieving a database (4) comprising information defining relations between said group of users and other groups of users served by respective further storage means;
- retrieving a further popularity factor (M(R'), M(R"), M(Rᵐ)) for each of the multimedia objects from each of said further storage means;
- calculating a similarity factor (S', S", Sᵐ) defining a similarity between said first storage means and each one of said further storage means, based on the retrieved database;
- calculating a second popularity factor (M(E)) for each of the multimedia objects based on said first popularity factor (M(R)) and said further popularity factors (M(R'), M(R"), M(Rᵐ)), wherein the weight of the further popularity factors depends on the corresponding calculated similarity factor (S', S", Sᵐ);
- selecting multimedia objects with the highest second popularity factor;

- storing said selected multimedia objects in the first storage means.

2.  Method according to claim 1, wherein each of the further popularity factors are calculated based on a number of historical requests of the respective multimedia object by said respective other groups of users.

3.  Method according to any one of the previous claims, wherein said database comprises a matrix wherein at least one of a column and a row represent said users, and wherein at least another one of said column and said row represent said other users, and wherein the values in the matrix define the relation between the respective users identified by the row index and the users identified by the column index.

4.  Method according to claim 3, wherein said matrix comprises a first predetermined value when a user identified by the row index is linked to the other user identified by the column index via a social community, and a second predetermined value when the user identified by the row index is not linked to the other user identified by the column index via said social community.

5.  Method according to claim 4, wherein the social community comprises at least one of Facebook, Twitter, Instagram, Google+, Netflix, Snapshot, Pinterest and Vine.

6.  Method according to any one of the previous claims, wherein the step of selecting multimedia objects comprises ranking the multimedia objects from highest to lowest second popularity factor and selecting a top list of the ranked multimedia objects.

7.  Method according to claim 6, wherein the top list comprises a predetermined number of multimedia objects, or comprises a number of multimedia objects occupying a predetermined data capacity.

8.  Method according to any one of the previous claims wherein said retrieving said database comprises observing requests made by said group of users and by said other group of users over a period of time, and detecting respective similarities between said group of users and said other group of users.

9.  Method according to any one of the previous claims, wherein said calculating said second popularity factor is calculated for each multimedia object as the sum of the first popularity factor and the further popularity factors multiplied by their corresponding similarity factors.

10. Method according to claim 1, wherein the second popularity factor further includes an externally determined popularity factor received from an external server, multiplied by a predetermined factor.

11. Storage means adapted for serving a number of users in a network, and wherein said storage means comprises programmed instructions for executing the method according to any one of the previous claims.

12. Router comprising a storage means according to claim 11.

13. Computer program adapted for being executed by a computer to execute the method according to one of the claims 1-10.

14. Computer readable storage medium comprising programmed instructions to execute the method according to one of the claims 1-10.

**Patentansprüche**

1.  Verfahren für das Speichern einer Auswahl von Multimediaobjekten durch ein erstes Speichermittel (C1), wobei das Verfahren die folgenden Schritte umfasst:

    - das Bedienen einer Gruppe von Benutzern (R1) durch besagte erste Speichermittel;
    - das Berechnen eines ersten Popularitätsfaktors (M(R)) für jedes der Multimediaobjekte (M) auf der Grundlage einer Anzahl historischer Anfragen nach dem betreffenden Multimediaobjekten seitens besagter Gruppe von Benutzern;
    - das Abrufen einer Datenbank (4), welche Informationen umfasst, welche die Beziehungen zwischen besagter Gruppe von Benutzern und anderen Gruppen von Benutzern definieren, welche von entsprechenden weiteren Speichermitteln bedient werden;

- das Abrufen eines weiteren Popularitätsfaktors (M(R'), M(R''), M(R$^m$)) für jedes der Multimediaobjekte von jedem der besagten, weiteren Speichermittel;

- das Berechnen eines Ähnlichkeitsfaktors (S', S'', S$^m$), welcher die Ähnlichkeit zwischen besagten ersten Speichermitteln und einem jeden der besagten weiteren Speichermittel auf der Grundlage der abgerufenen Datenbank definiert;

- das Berechnen eine zweiten Popularitätsfaktors (M(E)) für jedes der Multimediaobjekte auf der Grundlage besagten ersten Popularitätsfaktors (M(R)) und besagten weiteren Popularitätsfaktoren (M(R'), M(R''), M(R$^m$)), wobei das Gewicht der weiteren Popularitätsfaktoren von dem entsprechenden, berechneten Ähnlichkeitsfaktor (S', S'', S$^m$) abhängt;

- die Auswahl eines Multimediaobjekts mit dem höchsten zweiten Popularitätsfaktor;

- das Speichern besagten, ausgewählten Multimediaobjekts in den ersten Speichermitteln.

2. Verfahren nach Anspruch 1, wobei jeder der weiteren Popularitätsfaktoren auf der Grundlage einer Anzahl historischer Anfragen nach den entsprechenden Multimediaobjekten seitens der besagten, entsprechenden weiteren Gruppe von Benutzern berechnet wird.

3. Verfahren nach einem jeglichen der vorgenannten Ansprüche, wobei besagte Datenbank eine Matrix umfasst, wobei mindestens eine Spalte und besagte mindestens eine Reihe besagte Benutzer darstellen und wobei mindestens eine weitere der besagten Spalten und mindestens eine weitere der besagten Reihen besagte weitere Benutzer darstellen, und wobei die Werte in der Matrix die Beziehung zwischen denjenigen entsprechenden Benutzern, die von dem Reihenindex identifiziert werden, und denjenigen entsprechenden Benutzern definieren, welche durch den Spaltenindex identifiziert werden.

4. Verfahren nach Anspruch 3, wobei besagte Matrix einen ersten vordefinierten Wert umfasst, wenn ein vom Reihenindex identifizierter Benutzer über eine Community sozialer Medien mit dem anderen Benutzer verknüpft wird, welcher vom Spaltenindex identifiziert wird, und wobei besagte Matrix einen zweiten vordefinierten Wert umfasst, wenn der vom Reihenindex identifizierte Benutzer nicht über besagte Community sozialer Medien mit dem anderen Benutzer verknüpft ist, welcher über den Spaltenindex identifiziert wird.

5. Verfahren nach Anspruch 4, wobei die Community sozialer Medien mindestens entweder Facebook, Twitter, Instagram, Google+, Netflix, Snapshot, Pinterest und Vine umfasst.

6. Verfahren nach einem jeglichen der vorgenannten Ansprüche, wobei der Schritt des Auswählens von Multimediaobjekten das Einstufen der Multimediaobjekte in einer Rangordnung vom höchsten zum niedrigsten zweiten Popularitätsfaktor und die Auswahl einer Top-Liste der eingestuften Multimediaobjekte umfasst.

7. Verfahren nach Anspruch 6, wobei die Top-Liste eine vordefinierte Anzahl von Multimediaobjekten oder eine Anzahl von Multimediaobjekten umfasst, die eine vordefinierte Datenkapazität belegen.

8. Verfahren nach einem jeglichen der vorgenannten Ansprüche, wobei besagtes Abrufen besagter Datenbank umfasst, die seitens besagter Gruppe von Benutzern und seitens besagter weiterer Gruppe von Benutzern über einen Zweitraum hinweg erfolgten Anfragen zu betrachten und entsprechende Ähnlichkeiten zwischen besagter Gruppe von Benutzern und besagter weiterer Gruppe von Benutzern festzustellen.

9. Verfahren nach einem jeglichen der vorgenannten Ansprüche, wobei besagtes Berechnen besagten zweiten Popularitätsfaktors für jedes Multimediaobjekt als Berechnen der Summe des ersten Popularitätsfaktors und des weiteren Popularitätsfaktors multipliziert mit deren entsprechenden Ähnlichkeitsfaktoren erfolgt.

10. Verfahren nach Anspruch 1, wobei der zweite Popularitätsfaktor weiterhin einen extern bestimmten Popularitätsfaktor umfasst, der von einem externen Server bezogen und mit einem vordefinierten Faktor multipliziert wird.

11. Speichermittel, ausgelegt für das Bedienen einer Anzahl von Benutzern in einem Netzwerk und wobei besagte Speichermittel programmierte Anweisungen für das Ausführen eines Verfahrens nach einem jeglichen der vorgenannten Ansprüche umfassen.

12. Router, ein Speichermittel nach Anspruch 11 umfassend.

**13.** Computerprogramm, dafür ausgelegt, um von einem Computer ausgeführt zu werden, um das Verfahren nach einem der Ansprüche 1 - 10 auszuführen.

**14.** Computerlesbares Speichermittel, programmierte Anweisungen umfassend, um das Verfahren nach einem der Ansprüche 1 - 10 auszuführen.

## Revendications

**1.** Procédé pour stocker une sélection d'objets multimédias au moyen de premiers moyens de stockage (C1), le procédé comprenant les étapes suivantes :

- desservir un groupe d'utilisateurs (R1) au moyen desdits premiers moyens de stockage ;
- calculer un premier facteur de popularité (M(R)) pour chacun des objets multimédias (M) sur la base d'un certain nombre de demandes d'historique de l'objet multimédia respectif par ledit groupe d'utilisateurs ;
- récupérer une base de données (4) comprenant des informations définissant des relations entre ledit groupe d'utilisateurs et d'autres groupes d'utilisateurs desservis par des moyens de stockage supplémentaires respectifs ;
- récupérer un facteur de popularité supplémentaire (M(R'), M(R"), M(R$^m$)) pour chacun des objets multimédias à partir de chacun desdits moyens de stockage supplémentaires ;
- calculer un facteur de similarité (S', S", S$^m$) définissant une similarité entre lesdits premiers moyens de stockage et chacun desdits moyens de stockage supplémentaires, sur la base de la base de données récupérée ;
- calculer un deuxième facteur de popularité (M(E)) pour chacun des objets multimédias sur la base dudit premier facteur de popularité (M(R)) et desdits facteurs de popularité supplémentaires (M (R'), M (R"), M (R$^m$)), dans lequel la pondération des facteurs de popularité supplémentaires dépend du facteur de similarité (S', S", S$^m$) calculé correspondant ;
- sélectionner des objets multimédias ayant le deuxième facteur de popularité le plus élevé ;
- stocker lesdits objets multimédias sélectionnés dans les premiers moyens de stockage.

**2.** Procédé selon la revendication 1, dans lequel chacun des facteurs de popularité supplémentaires est calculé sur la base d'un certain nombre de demandes historiques de l'objet multimédia respectif par lesdits autres groupes d'utilisateurs respectifs.

**3.** Procédé selon l'une quelconque des revendications précédentes, dans lequel ladite base de données comprend une matrice dans laquelle au moins une colonne et une rangée représentent lesdits utilisateurs, et dans laquelle au moins un autre élément parmi ladite colonne et ladite rangée représente lesdits autres utilisateurs, et dans lequel les valeurs dans la matrice définissent la relation entre les utilisateurs respectifs identifiés par l'indice de rangée et les utilisateurs identifiés par l'indice de colonne.

**4.** Procédé selon la revendication 3, dans lequel ladite matrice comprend une première valeur prédéterminée lorsqu'un utilisateur identifié par l'indice de rangée est lié à l'autre utilisateur identifié par l'indice de colonne par l'intermédiaire d'un réseau social, et une deuxième valeur prédéterminée lorsque l'utilisateur identifié par l'indice de rangée n'est pas lié à l'autre utilisateur identifié par l'indice de colonne par l'intermédiaire dudit réseau social.

**5.** Procédé selon la revendication 4, dans lequel le réseau social comprend au moins un des réseaux sociaux suivants : Facebook, Twitter, Instagram, Google+, Netflix, Snapshot, Pinterest et Vine.

**6.** Procédé selon l'une quelconque des revendications précédentes, dans lequel l'étape de sélection d'objets multimédias comprend le classement des objets multimédias du deuxième facteur de popularité le plus élevé au deuxième facteur de popularité le plus faible et la sélection d'une liste des premiers objets multimédias classés.

**7.** Procédé selon la revendication 6, dans lequel la liste des premiers objets multimédias comprend un nombre prédéterminé d'objets multimédias ou comprend un certain nombre d'objets multimédias occupant une capacité de données prédéterminée.

**8.** Procédé selon l'une quelconque des revendications précédentes dans lequel ladite récupération de ladite base de données comprend l'observation de demandes faites par ledit groupe d'utilisateurs et par ledit autre groupe d'utilisateurs sur une certaine période, et la détection de similarités respectives entre ledit groupe d'utilisateurs et ledit autre groupe d'utilisateurs.

9. Procédé selon l'une quelconque des revendications précédentes, dans lequel ledit calcul dudit deuxième facteur de popularité est calculé pour chaque objet multimédia en tant que somme du premier facteur de popularité et des facteurs de popularité supplémentaires multipliée par leurs facteurs de similarité correspondants.

10. Procédé selon la revendication 1, dans lequel le deuxième facteur de popularité comprend en outre un facteur de popularité déterminé de manière externe provenant d'un serveur externe, multiplié par un facteur prédéterminé.

11. Moyens de stockage adaptés pour desservir un certain nombre d'utilisateurs dans un réseau, et lesdits moyens de stockage comprenant des instructions programmées pour exécuter le procédé selon l'une quelconque des revendications précédentes.

12. Routeur comprenant des moyens de stockage selon la revendication 11.

13. Programme informatique adapté pour être exécuté par un ordinateur afin d'exécuter le procédé selon l'une des revendications 1 à 10.

14. Support de stockage lisible par ordinateur comprenant des instructions programmées pour exécuter le procédé selon l'une des revendications 1 à 10.

**FIG. 1**

**FIG. 2**

M      M(R)      M(R')      M(R'')      M(R$^m$)      M(E)

| | | | | | | | | | | |
|---|---|---|---|---|---|---|---|---|---|---|
| A | | $P_A$ | | $P'_A$ | | $P''_A$ | | $P^m_A$ | | $P^E_A$ | | $P2_A$ |

$$
\begin{array}{c}
A \\ B \\ C \\ D \\ E \\ F
\end{array}
\quad
\begin{array}{c}
P_A \\ P_B \\ P_C \\ P_D \\ P_E \\ P_F
\end{array}
+ S'
\begin{array}{c}
P'_A \\ P'_B \\ P'_C \\ P'_D \\ P'_E \\ P'_F
\end{array}
+ S''
\begin{array}{c}
P''_A \\ P''_B \\ P''_C \\ P''_D \\ P''_E \\ P''_F
\end{array}
\ldots + S^m
\begin{array}{c}
P^m_A \\ P^m_B \\ P^m_C \\ P^m_D \\ P^m_E \\ P^m_F
\end{array}
+ F
\begin{array}{c}
P^E_A \\ P^E_B \\ P^E_C \\ P^E_D \\ P^E_E \\ P^E_F \\ P^E_G
\end{array}
=
\begin{array}{c}
P2_A \\ P2_B \\ P2_C \\ P2_D \\ P2_E \\ P2_F \\ P2_G
\end{array}
$$

## FIG. 3

| | $U_1$ | $U_2$ | $U_3$ |
|-----|-------|-------|-------|
| $U_4$ | 0 | 1 | 0 |
| $U_5$ | 1 | 2 | 0 |
| $U_6$ | 2 | 0 | 3 |

4

## FIG. 4

**EP 2 860 940 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100281035 A